# EUROPÄISCHE PATENTSCHRIFT

(11) **EP 0 759 262 B1**
(45) Veröffentlichungstag und Bekanntmachung des Hinweises auf die Patenterteilung: **26.05.1999**
(21) Anmeldenummer: 94926934.4
(22) Anmeldetag: 12.09.1994
(51) Int. Cl.: H05B 6/68, G01J 5/12

(54) **TEMPERATURKOMPENSIERTES SENSORMODUL**
TEMPERATURE-COMPENSATED SENSOR MODULE
MODULE DETECTEUR A COMPENSATION THERMIQUE

(30) Priorität: 16.09.1993 DE 4331574
(43) Veröffentlichungstag der Anmeldung: 26.02.1997
(73) Patentinhaber: Heimann Optoelectronics GmbH, D-65199 Wiesbaden (DE)
(72) Erfinder: SCHIEFERDECKER, Jörg, D-65197 Wiesbaden (DE); QUAD, Reiner, D-65232 Taunusstein (DE); SCHULZE, Mischa, D-15344 Strausberg (DE)
(74) Vertreter: Beetz & Partner Patentanwälte
(86) Internationale Anmeldenummer: EP9403041
(87) Internationale Veröffentlichungsnummer: WO9508251

(56) Entgegenhaltungen:
- EP-A- 0 015 710
- WO-A-92/02793
- FR-A- 2 312 164
- US-A- 3 449 121
- US-A- 4 286 134
- US-A- 4 431 306
- PATENT ABSTRACTS OF JAPAN vol. 7, no. 256 (P-236) (1401) 15. November 1983 & JP,A,58 140 619 (CHINO SEISAKUSHO K.K.) 20. August 1983
- PATENT ABSTRACTS OF JAPAN vol. 4, no. 70 (P-12) (552) 23. Mai 1980 & JP,A,55 037 917 (TOKYO SEIKOU K.K.) 17. März 1980
- PATENT ABSTRACTS OF JAPAN vol. 15, no. 144 (P-1189) 11. April 1991 & JP,A,03 020 690 (OMRON TATEISI ELECTRON CO) 29. Januar 1991

## Beschreibung

Die vorliegende Erfindung betrifft ein Sensormodul zur berührungslosen Temperaturmessung in Koch-, Back- oder Heizgeräten gemäß dem Oberbegriff des Anspruchs 1. Ein solches Modul ist aus der US 3 449 121 bekannt.

Ein weiteres Sensormodul ist aus der DE 38 43 947 bekannt.

Bei dem dort beschriebenen Haushaltsgerät handelt es sich um einen Brotröster, der mit einem Infrarotdetektor ausgerüstet ist, dessen Ausgangssignal über einen Komparator mit einem Sollwert verglichen wird. Bei Überschreitung des Sollwertes wird das Gerät abgeschaltet. Die Meßgenauigkeit dieser Anordnung schwankt stark mit der Umgebungstemperatur, die am Einsatzort des Infrarotdetektors herrscht. Zur Erhöhung der Meßgenauigkeit müßte der Infrarotdetektor von den Umgebungstemperaturschwankungen thermisch isoliert werden, was technisch aufwendig und kostentreibend ist.

Aus der EP-15 710 D1 ist ein Hitzekochapparat, insbesondere ein Mikrowellenherd, bekannt, mit einem Sensormodul, das vorzugsweise einen pyroelektrischen IR-Detektor aufweist, auf dem Infrarotstrahlung, ausgehend von dem Gargut (Meßobjekt) über ein als "Guckloch" bezeichnetes Eingangsfenster, einen Chopper, einen Hohlspiegel, durch ein zylindrisches Meßrohr von ca. 150 mm Länge und einem am Ende des Meßrohrs angeordneten Parabolspiegel abgebildet wird. Detektor und Parabolspiegel haben die gleiche optische Achse, wodurch der zentrale 3ereich der Meßstrahlung abgeschottet wird. Ferner sind für den Chopper ein Motor und eine Lichtschranke erforderlich. Zusätzlich sind mechanische Mittel mit gesondertem Antrieb nötig, um das Eindringen von Dampf in den Meßkanal zum Infrarot-Detektor zu verhindern, wobei am Eingang des Meßrohrs ein Verschluß angeordnet ist, der das Meßrohr nach jeder Messung verschließt. Ferner wird ein Heizelement vorgeschlagen, um den Hohlspiegel definiert zu erwärmen. Insgesamt ist dieses Sensormodul sehr aufwendig gebaut und durch die Vielzahl der Komponenten, insbesondere der mechanisch angetriebenen Komponenten, störungsanfällig und kostenintensiv.

Aus der D-26 21 457 C3 ist eine weitere Infrarotdetektoranordnung in einem Mikrowellenherd bekannt. Bei dieser Lösung wird die von mehreren Stellen des Gargutes ausgehende Infrarotstrahlung sequentiell erfaßt. Wiederum wird ein pyroelektrischer Detektor in Verbindung mit einer Chopperanordnung verwendet, die aus zwei mit verschiedenen Geschwindigkeiten umlaufenden Blendenscheiben mit mehreren Löchern besteht.

Diese Detektoranordnung besitzt keine optisch fokussierenden Bauteile (Linsen oder Spiegel) zur Begrenzung des Blickwinkels. Statt dessen werden über die auf der zweiten Scheibe angebrachten Löcher verschiedene Stellen des Garraumes abgetastet. Beim Auftreten der höchsten Temperatur wird der Mikrowellenherd abgeschaltet.

Diese Anwendung ist nicht für kleine oder längliche Meßobjekte geeignet, da diese nicht einen größeren Teil des Garraumes bedecken. Außerdem sind weitere Fehlerquellen dadurch möglich, daß nach mehreren Heizvorgängen mit höherer Temperatur die Umgebung des Gargutes "heißer" sein kann als das Gargut selbst. Zusätzliche Fehlerquellen können durch Eigenstrahlung und Strahlungsreflexionen von den rotierenden Scheiben entstehen.

Insbesondere durch die zwei, mit verschiedener Geschwindigkeit angetriebenen, bewegten Teile ist die Detektoranordnung relativ aufwendig und störanfällig.

Aus der US 4 286 134 ist ein Temperatur-Meßaufbau für Mikrowellenöfen bekannt. Dort ist ein elektrischer Ofen mit einem Infrarot-Erkennungselement ausgerüstet, wobei ein beweglich angebrachter Reflektor Infrarot-Strahlen, die von dem Inneren des Ofens ausgesendet werden, auf eine Platte konvergiert, die die konvergierten Strahlen durch eine Einlaßöffnung durchläßt.

Aus der JP 58 140 619 ist ein Kompensationsschaltkreis für den kalten Kontakt eines Thermopiles bekannt. Hier wird der Ausgang eines Thermopiles und der Ausgang eines Umgebungstemperatur-Sensors durch jeweils einen Vorverstärker verstärkt und danach addiert.

Aus der JP 3 020 690 ist eine Sensorvorrichtung für Infrarot-Strahlen aussendende Objekte bekannt. Dabei subtrahiert eine Temperaturdifferenz-Erkennungseinrichtung die Temperaturdaten eines Parabolspiegels, der Infrarot-Strahlung auf ein Thermopile reflektiert, von dem Ausgang des Thermopiles.

Aus der US 3 449 121 ist ein Infrarotthermometer bekannt. Es weist ein Thermometerelement sowie einen einen Thermopile aufweisenden Infrarotdetektor auf, wobei das Erfassungsfenster des Detektors über einen Hohlspiegel auf eine Öffnung 14 für die zu erfassende Strahlung abgebildet wird.

Der vorliegenden Erfindung liegt die Aufgabe zugrunde, ein Sensormodul, insbesondere zur berührungslosen Temperaturbestimmung durch die Messung von Infrarotstrahlung vorzustellen, das in einem großen Umgebungstemperaturbereich mit hoher Meßgenauigkeit anwendbar ist, keine beweglichen Teile besitzt und beim Auswechseln ohne Nachkalibrierung einsetzbar ist.

Diese Aufgabe wird mit den Merkmalen des Anspruchs 1 gelöst. Merkmale bevorzugter Ausführungsformen sind in den Unteransprüchen beansprucht.

Die Grundidee der vorliegenden Erfindung besteht darin, eine Thermosäule, auch Thermopile genannt, und ein Temperaturreferenzelement in unmittelbarer Nachbarschaft zueinander anzuordnen, die Signale der Thermosäule und des Temperaturreferenzelements jeweils geeignet vorzuverstärken, um anschließend aus dem Differenzsignal ein Steuersignal bzw. ein Temperatursignal abzuleiten.

Das erfindungsgemäße Sensormodul findet seine Anwendung in Koch-, Heiz- oder Backgeräten.

Die Austauschbarkeit des Sensormoduls ohne Kalibrierung des Geräts sowie eine hohe Meßgenauigkeit in einem großen Umgebungstemperaturbereich des Moduls werden dadurch erreicht,
- daß sich in unmittelbarer Nähe der "kalten" Kontakte der Thermosäule, vorzugsweise in deren Gehäuse, ein Temperaturreferenzelement mit bekannter Charakteristik (vorzugsweise ein Thermistor oder PT100) befindet;
- daß die Verstärkung des Vorverstärkers zur Verstärkung des Thermosäulensignals in einem Kalibrierschritt vor dem Einbau in ein Gerät so eingestellt wird, daß die üblicherweise vorhandenen Toleranzen der Empfindlichkeit der Thermosäule von typisch einigen 10 % ausgeglichen werden;
- daß der Transmissionsbereich des zweiten Infrarotfilters größer ist als der des ersten Infrarotfilters am Thermosäulensensor, wodurch sich Toleranzen des Transmissionsbereichs des zweiten IR-Filters nach dem Austausch des Sensormoduls nicht auf die Meßgenauigkeit auswirken; und
- daß die Temerpaturkennlinie des kompensierten Ausgangssignals des Sensormoduls aufgrund der Vorkalibrierung der Sensorverstärkung und der bekannten Kennlinie des Temperaturreferenzelements sehr genau reproduzierbar ist.

Im folgenden wird die Erfindung anhand der Beschreibung eines Ausführungsbeispiels unter Bezugnahme auf die Zeichnungen näher erläutert. Darin zeigen:
- Fig. 1: ein Blockschaltbild des erfindungsgemäßen Sensormoduls;
- Fig. 2: schematisch im Schnitt den Einbau des Sensormoduls in einem Mikrowellenherd;
- Fig. 3: die Anordnung der Filterscheibe an der Innenwand eines Mikrowellenherds gemäß einer ersten Ausführungsform;
- Fig. 4: die Anbringung einer Filterscheibe an der Innenwand eines Mikrowellenherds gemäß einer zweiten Ausführungsform.

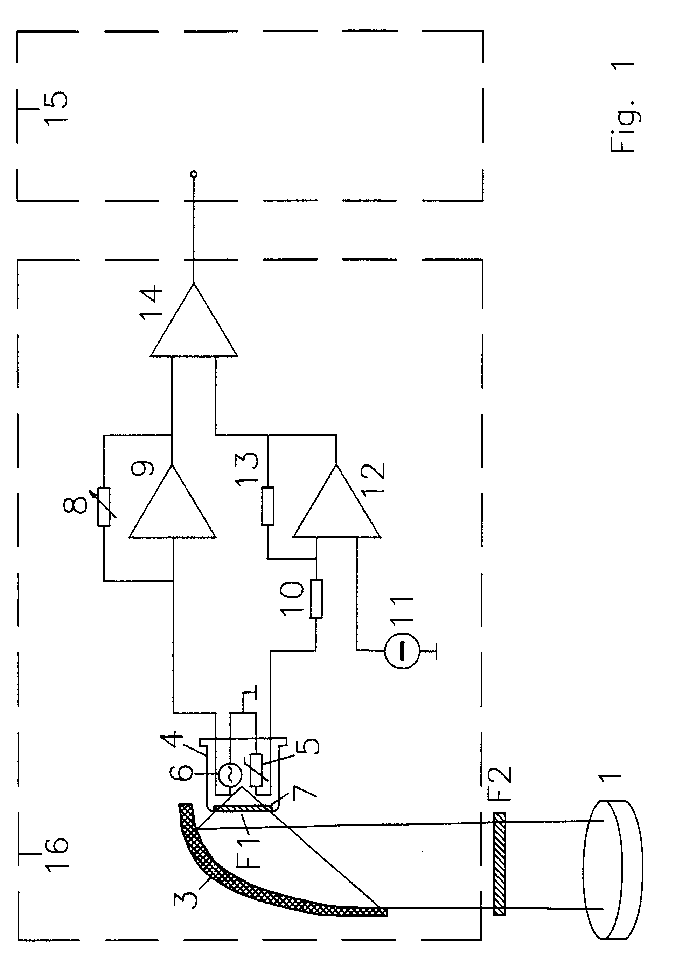

Fig. 1 zeigt schematisch den Aufbau des erfindungsgemäßen Sensormoduls. Man erkennt ein Meßobjekt 1, von dem Infrarot-strahlung durch einen Infrarotfilter F2 in ein erstes Element 16 des Sensormoduls eingeführt wird. In dem Element 16 wird die Infrarotstrahlung über einen Parabolspiegel 3 gebündelt und um 90° umgelenkt. Im Brennfleck des fokussierten Infrarotstrahls befindet sich eine Thermosäule 6. Diese ist in einem Gehäuse 4 zusammen mit einem Temperaturreferenzelement 5 angeordnet. Der Infrarotlichtstrahl tritt durch einen Filter F1 (7) in das Gehäuse ein. Der Durchlaßbereich des Filters F1 ist so gewählt, daß er innerhalb des Durchlaßbereichs des Filters F2 liegt, wobei der Durchlaßbereich des Filters F2 etwas größer ist als der des Filters F1. Dadurch wird erreicht, daß beim Austausch des Elements 16 keine Meßfehler dadurch erzeugt werden, daß auf den Sensor fallende Lichtintensität verlorgengeht, weil sich die Filterbereiche der Filter F1 und F2 nur teilweise und nicht reproduzierbar überlappen.

Der Ausgang der Thermosäule 6 ist an den Eingang eines Vorverstärkers 9 geschaltet, der mit einem kalibrierbaren Verstärkungsfaktor, dargestellt durch den Gegenkopplungswiderstand 8, verstärkt. Das Temperaturreferenzelement, hier ein Thermistor, liefert ein Eingangssignal für den Vorverstärker 12, der dessen Ausgangssignal in ein umgebungstemperaturabhängiges Korrektursignal umwandelt. Dies erfolgt neben dem Thermistor 5 und dem Operationsverstärker 12 durch die Widerstände 10 und 13 sowie die Spannungsreferenz 11. Durch die Wahl der Widerstände 10, 13, des Thermistors 5 und der Spannungsreferenz 11 wird der Temperaturbereich festgelegt, in dem ein geringer Meßfehler bei Umgebungstemperaturschwankungen eintritt. Prinzipiell sind auch andere Schaltungsvarianten zur Erzeugung des Korrektursignals möglich. Für einen konkreten Geräteaufbau genügt es, die Werte des Thermistors 5, der Widerstände 10 und 13 und der Spannungsreferenz 11 einmal festzulegen. Sie können dann auch bei großen Stückzahlen beibehalten werden. Es müssen lediglich Schwankungen der Empfindlichkeit der Thermosäule 6 einschließlich der Filtercharakteristik des ersten Infrarotfilters 7 durch Kalibrierung der Verstärkung des Vorverstärkers 9 durch den veränderlichen Widerstand 8 vorkalibriert werden. Die Verstärkungskalibrierung kann beispielsweise mittels Lasertrimmen von Widerständen oder durch Kurzschließen bzw. Auftrennen paralleler oder serieller Abgleichwiderstände erreicht werden. Das Temperaturkompensationssignal wird in einem Differenzverstärker 14 vom verstärkten Thermosäulensignal am Ausgang des ersten Vorverstärkers abgezogen. Das somit temperaturkompensierte Ausgangssignal des Differenzverstärkers 14 wird in der elektronischen Steuereinheit ECU 15 zur Weiterverarbeitung bereitgestellt, wo es beispielsweise zur Steuerung oder Regelung von Back-, Koch- oder Heizprozessen verwendet werden kann. Nach der Kalibrierung weist jedes Sensormodul eine in gewissen Toleranzen reproduzierbare Signalcharakteristik auf, die von der ECU 15 verarbeitet werden kann. Messungen von Oberflächentemperaturen eines Schwarzkörperstrahlers konstanter Temperatur mit einem erfindungsgemäßen Sensormodul haben ergeben, daß sich das Meßergebnis nur um ± 2 °C ändert, während die Umgebungstemperatur des Moduls von 10 auf 90 °C angehoben wurde. Ein Abgleich des Gesamtgerätes kann somit bei Inbetriebnahme entfallen. Ebenso kann im Reparaturfall ein defektes Modul ohne Gerätekalibrierung ausgetauscht werden. Dadurch ist eine wesentliche Vereinfachung des Geräteservice möglich. Auch die Ansprechgeschwindigkeit des Sensors ist sehr hoch, so daß eine schnelle Temperaturänderung auf der Oberfläche des Meßobjektes in Bruchteilen einer Sekunde erfaßt werden können und durch sofortiges Abschalten des Gerätes ein Anbrennen von Backgut verhindert werden kann.

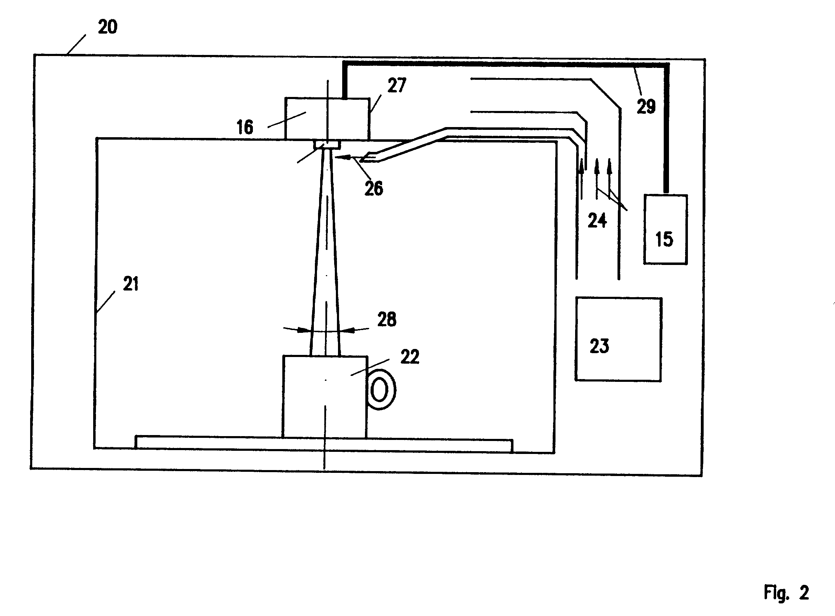

Fig. 2 zeigt ein erfindungsgemäßes Sensormodul, das in einen Mikrowellenherd eingebaut ist. Das Element 16 wird im Zwischenraum zwischen der inneren Gehäusewand 21 und der äußeren Gerätewand 20 des Mikrowellenherdes eingebaut und kann bei Bedarf durch eine metallische Abschirmung 27 gegen Störungen, die von dem Mikrowellengerät ausgehen, abgeschirmt werden. Durch das in die Zwischenwand 21 eingesetzte infrarotdurchlässige Filter F2 gelangt Infrarotstrahlung von dem zu erwärmenden Objekt 22 in das Element 16. Das temperaturkompensierte Ausgangssignal des Elements 16, das dem Ausgangssignal des Differenzverstärkers 14 entspricht, wird über ein ggf. abzuschirmendes Kabel 29 zur Steuereinheit ECU 15 geführt, die mit Abstand vom Element 16 in dem Gerät 20 angeordnet ist. Dort kann das temperaturkompensierte Ausgangssignal, das die Oberflächentemperatur des Gargutes wiedergibt, mit einem Sollwert verglichen werden, wonach z.B. das Abschalten des Magnetrons 23 des Mikrowellenherdes erfolgt. Wird das Signal über Analog/Digital-Wandlung in einen Prozessor gelesen, so kann der Garprozeß in mehreren Stufen kontrolliert werden (z.B. Takten oder Herabsetzen der Magnetronleistung ab Erreichen einer bestimmten Oberflächentemperatur und Ausschalten nach Erreichen der Endtemperatur).

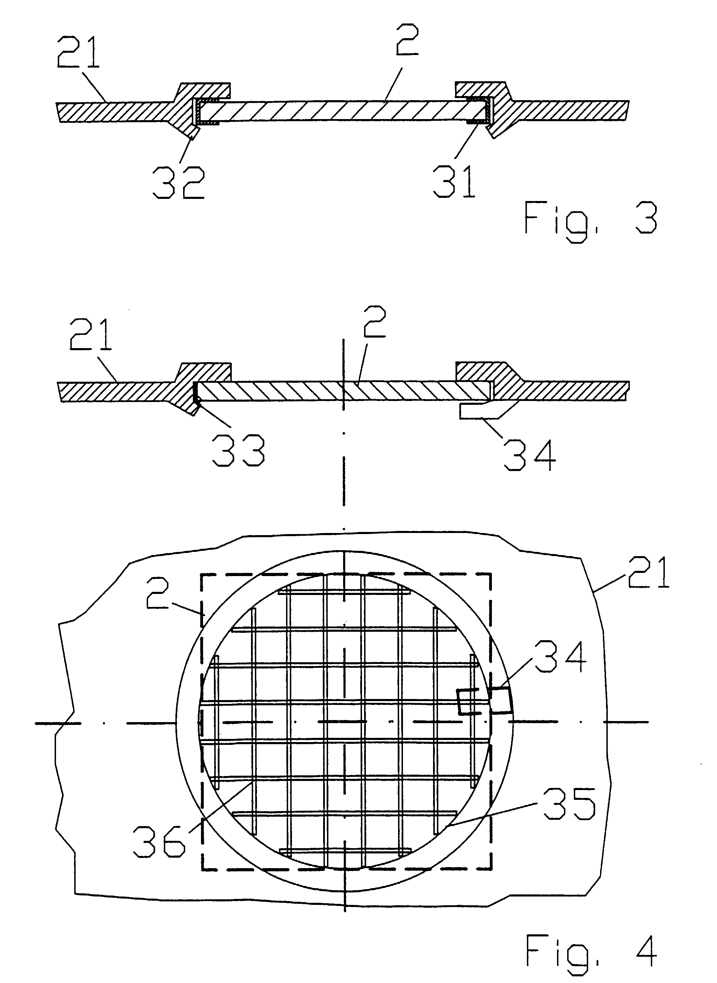

Die Verschmutzung des zweiten Filters F2 wird dadurch verhindert, daß ein Teil des Kühlluftstroms 24 von der Magnetronkühlung durch einen Bypass direkt vor das Filter F2 geführt wird. Fig. 2 zeigt den abgezweigten Luftstrom 26. Wird das Sensorfilter jedoch nach längerem oder unsachgemäßem Gebrauch (z.B. durch Spritzer vom Gargut) verschmutzt, so kann die Filterscheibe F2 vom Bediener leicht selbst gereinigt werden. Eine Verschmutzung der Parabolspiegeloptik oder des Detektoreingangsfilters F1, die vom Benutzer nicht fachgerecht gereinigt werden können, wird in jedem falle verhindert. Der öffnungswinkel 28 des Infrarotstrahlenbündels, das vom Sensormodul ausgewertet wird, läßt sich mit der vorgeschlagenen Parabolspiegeloptik auf wenige Grad begrenzen, so daß sich eine genaue Lokalisierung auf dem Gargut ergibt. Dies ist besonders wichtig, da detektierte Strahlungsanteile aus der Umgebung das Meßergebnis wesentlich verfälschen können. Außerdem gestattet der geringe Öffnungswinkel auch die Auswertung kleiner Meßobjekte. Wird bei der Anwendung im Mikrowellenherd ausschließlich von großflächigen Meßobjekten ausgegangen, so kann das Sensormodul auch an den seitlichen Wänden des Mikrowellengehäuses angeordnet sein. In diesem Fall ist der Strahlengang nicht senkrecht, sondern schräg auf das Gargut gerichtet. Die Montage des Filters F2 in der Gehäuseinnenwand 21 ist in den Fig. 3 und 4, die zwei verschiedene Ausführungsformen zeigen, näher beschrieben. So wird nach der in Fig. 3 gezeigten Ausführungsform die Filterscheibe F2 in einem Metallrahmen 31 gefaßt, und durch eine Einrastverbindung 32 in eine eingeprägte Vertiefung der Metall-Innenwand eingerastet.

Fig. 4 zeigt eine Halterung der Filterscheibe F2 durch eine Klebeverbindung 33 oder durch das Umlegen von Biegelaschen 34. Zur Verringerung der Einstreuung von Mikrowellenstrahlung aus dem Garraum durch die Öffnung 35 der Zwischenwand in das Sensormodul ist es vorteilhaft, das Filter aus einem leitfähigen Material (z.B. Si oder Ge) herzustellen und elektrisch leitend mit der Zwischenwand zu verbinden. Dann muß der Kleber 33 ebenfalls elektrisch leitfähig sein bzw. es muß durch federnde Biegelaschen ein dauerhafter Kontakt erreicht werden. Zusätzlich kann die Mikrowelleneinstrahlung durch ein auf dem Filter aufgebrachtes Gitter 36 aus dünnen metallischen Leiterbahnen erreicht werden. Diese Leiterbahnen lassen sich über einen Aufdampfprozeß für viele Filter auf einer großen Scheibe gleichzeitig kostengünstig erreichen. Wird das Sensormodul in Geräten eingesetzt, wo eine Verwchmutzung der Parabolspiegeloptik bzw. des Sensorfilters F1 ausgeschlossen ist, so kann auf das Filter F2 verzichtet werden.

## Patentansprüche

1. Sensormodul zur berührungslosen Temperaturmessung in Koch-, Back- oder Heizgeräten mit einem Hohlspiegel (3), dem ein Sensorelement zugeordnet ist, dessen Ausgangssignal mit einem Referenzsignal verglichen wird und in einer Auswerteschaltung (15) in ein Temperatursignal umgewandelt wird, wobei das Sensorelement (4) eine Thermosäule (6) aufweist, in dessen unmittelbarer Nähe ein Temperaturreferenzelement (5) angeordnet ist,
**dadurch gekennzeichnet,** daß
- das Sensorelement im Brennfleck des Hohlspiegels (3) angeordnet ist,
- ein kalibrierbarer erster Vorverstärker (8, 9) das Ausgangssignal der Thermosäule (6) verstärkt,
- ein zweiter Vorverstärker (10-13) das Ausgangssignal des Temperaturreferenzelements (5) verstärkt, und
- ein dritter Vorverstärker (14) als Differenzverstärker geschaltet ist, der die Signaldifferenz der Ausgänge des ersten (8, 9) und des zweiten (10-13) Vorverstärkers bildet.

2. Sensormodul nach Anspruch 1,
dadurch gekennzeichnet, daß
in dem Strahlengang ein erstes Infrarotfilter (F1) mit einem Durchlaßbereich von λ₁ bis λ₂ angeordnet ist.

3. Sensormodul nach Anspruch 2, dadurch gekennzeichnet, daß zwischen dem Hohlspiegel und dem Meßobjekt ein zweites Infrarotfilter (F2) mit einem Durchlaßbereich von λ₃ bis λ₄ angeordnet ist, mit λ₁ > λ₃ und λ₄ > λ₂.

4. Sensormodul nach einem der Ansprüche 1 bis 3,
dadurch gekennzeichnet, daß
der Hohlspiegel (3) ein Parabolspiegel ist und das Sensorelement (4) so ausgerichtet ist, daß die optische Achse des Meßstrahls am Parabolspiegel (3) vor und nach der Reflexion einen Winkel von 90° einschließt.

5. Sensormodul nach einem der Ansprüche 1 bis 4,
dadurch gekennzeichnet, daß
die Thermosäule (6) und das Temperaturreferenzelement (5) in einem gemeinsamen Gehäuse angeordnet sind.

6. Sensormodul nach einem der Ansprüche 1 bis 5,
dadurch gekennzeichnet, daß
das Temperaturreferenzelement (5) ein Thermistor ist.

7. Sensormodul nach einem der Ansprüche 1 bis 6,
dadurch gekennzeichnet, daß
der erste und der zweite Vorverstärker (8, 9; 10-13) dicht an dem Sensorelement (4) angeordnet ist.

8. Sensormodul nach Anspruch 3, dadurch gekennzeichnet, daß das Sensormodul mit Thermopilesensor, Infrarotfilter F1, Thermistor, Parabolspiegel und den Vorverstärkern (8, 9; 10-13; 14) im Zwischenraum zwischen Innenwand und Außenwand eines Mikrowellenherdes angeordnet ist, während das zweite Filter F2 in einer Öffnung der Innenwand angeordnet ist, wobei ein Teilstrom des üblicherweise zur Kühlung des Magnetrons des Mikrowellenherdes erforderlichen Luftstroms in Form eines Bypasses vom Hauptstrom abgezweigt wird und durch eine Öffnung der Innenwand vor dem Filter F2 in den Innenraum des Herdes gelangt, wo er an dem Filter F2 vorbeiströmt.

9. Sensormodul nach Anspruch 8, dadurch gekennzeichnet, daß das Infrarotfilter F2 aus einem elektrisch leitfähigen Material, insbesondere Silicium, besteht und die Ränder des Filters mit der inneren Wand des Mikrowellenherdes elektrisch leitend verbunden werden.

10. Sensormodul nach Anspruch 8,
dadurch gekennzeichnet, daß
das Infrarotfilter F2 mit einem Gitter von dünnen metallischen Leitbahnen überzogen ist, die mit der inneren Wand des Mikrowellenherdes elektrisch leitend verbunden werden.

## Claims

1. A sensor module for contactless temperature measurement in cooking, baking or heating appliances comprising a concave mirror (3) with which there is associated a sensor element, the output signal of which is compared with a reference signal and converted to a temperature signal in an evaluation circuit (15), the sensor element (4) having a thermopile (6), in the immediate vicinity of which a temperature reference element (5) is disposed, characterised in that
- the sensor element is disposed at the focus of the concave mirror (3),
- a first preamplifier (8, 9), which is adapted to be calibrated, amplifies the output signal of the thermopile (6),
- a second preamplifier (10 - 13) amplifies the output signal of the temperature reference element (5), and
- a third preamplifier (14) is connected as a differential amplifier and forms the difference between the signals of the outputs of the first preamplifier (8, 9) and of the second preamplifier (10 - 13).

2. A sensor module according to claim 1,
characterised in that a first infrared filter (F1) having a pass range from λ₁ to λ₂ is disposed in the path of the rays.

3. A sensor module according to claim 2,
characterised in that a second infrared filter (F2) having a pass range from λ₃ to λ₄ is disposed between the concave mirror and the measured object, λ₁ being > λ₃ and λ₄ being > λ₂.

4. A sensor module according to any one of claims 1 to 3, characterised in that the concave mirror (3) is a parabolic mirror and the sensor element (4) is so aligned that the optical axis of the measurement beam at the parabolic mirror (3) in front of and after the reflection includes an angle of 90°.

5. A sensor module according to any one of claims 1 to 4, characterised in that the thermopile (6) and the temperature reference element (5) are disposed in a common housing.

6. A sensor module according to any one of claims 1 to 5, characterised in that the temperature reference element (5) is a thermistor.

7. A sensor module according to any one of claims 1 to 6, characterised in that the first and second preamplifiers (8, 9; 10 - 13) are disposed close to the sensor element (4).

8. A sensor module according to claim 3,
characterised in that the sensor module with the thermopile sensor, infrared filter (F1), thermistor, parabolic mirror and the preamplifiers (8, 9; 10 - 13; 14) is disposed in the space between the inner wall and the outer wall of a microwave oven while the second filter (F2) is disposed in an opening in the inner wall, part of the air flow normally required to cool the magnetron of the microwave oven being branched off from the main flow in the form of a bypass and flowing through an opening in the inner wall in front of the filter (F2) into the interior of the oven, where it flows past the filter (F2).

9. A sensor module according to claim 8,
characterised in that the infrared filter (F2) consists of an electrically conductive material, more particularly silicon, and the edges of the filter are electrically conductively connected to the inner wall of the microwave oven.

10. A sensor module according to claim 8,
characterised in that the infrared filter (F2) is covered with a network of thin metal conductive circuits which are electrically conductively connected to the inner wall of the microwave oven.

## Revendications

1. Module de capteur pour la mesure de température sans contact dans des appareils de cuisson, de friture ou de chauffage comportant un miroir concave (3), auquel est associé un élément formant capteur, dont le signal de sortie est comparé à un signal de référence, et est converti en un signal de température dans un circuit d'exploitation (15), l'élément formant capteur (4) comportant une thermopile (6), à proximité directe de laquelle est disposé un élément de référence de température (5), caractérisé en ce que
- l'élément formant capteur est disposé au foyer du miroir concave (3),
- un premier préamplificateur (8, 9), pouvant être étalonné, amplifie le signal de sortie de la thermopile (6),
- un second préamplificateur (10-13) amplifie le signal de sortie de l'élément de référence de température (5), et
- un troisième préamplificateur (14) est branché en tant qu'amplificateur différentiel, qui forme le signal de différence entre les signaux de sortie du premier préamplificateur (8, 9) et du second préamplificateur (10-13).

2. Module de capteur selon la revendication 1, caractérisé en ce que le premier filtre à infrarouge (F1) possédant une bande passante s'étendant de λ₁ à λ₂ est disposé dans le trajet du rayonnement.

3. Module de capteur selon la revendication 2, caractérisé en ce qu'entre le miroir concave et l'objet de mesure est disposé un second filtre à infrarouge (F2) possédant une bande passante s'étendant de λ₃ à λ₄, avec λ₁ > λ₃ et λ₄ > λ₂.

4. Module de capteur selon l'une des revendications 1 à 3, caractérisé en ce que le miroir concave (3) est un miroir parabolique et l'élément formant capteur (4) est orienté de telle sorte que l'axe optique du faisceau de mesure, au niveau du miroir parabolique (3), fait un angle de 90° avant et après la réflexion.

5. Module de capteur selon l'une des revendications 1 à 4, caractérisé en ce que la thermopile (6) et l'élément de référence de température (5) sont disposés dans un boîtier commun.

6. Module de capteur selon l'une des revendications 1 à 5, caractérisé en ce que l'élément de référence de température (5) est une thermistance.

7. Module de capteur selon l'une des revendications 1 à 6, caractérisé en ce que les premier et second préamplificateurs (8, 9 ; 10-13) sont disposés à proximité directe de l'élément formant capteur (4).

8. Module de capteur selon la revendication 3, caractérisé en ce que le module de capteur est disposé, avec le capteur à thermopile, le filtre à infrarouge (Fl), la thermistance, le miroir parabolique et les préamplificateurs (8, 9 ; 10-13 ; 14), dans l'espace intercalaire entre la paroi intérieure et la paroi extérieure d'un four à micro-ondes, tandis que le second filtre (F2) est disposé dans une ouverture de la paroi intérieure, une partie du courant d'air nécessaire habituellement pour refroidir le magnétron du four à micro-ondes étant dérivé sous la forme d'un courant de dérivation à partir du courant principal et parvient, par une ouverture de la paroi intérieure, en avant du filtre (F2), dans l'espace intérieur du four, où il passe devant le filtre (F2).

9. Module de capteur selon la revendication 8, caractérisé en ce que le filtre à infrarouge (F2) est constitué par un matériau électriquement conducteur, notamment du silicium, et les bords du filtre sont reliés d'une manière électriquement conductrice à la paroi intérieure du four à micro-ondes.

10. Module de capteur selon la revendication 8, caractérisé en ce que le filtre à infrarouge (F2) est recouvert par un réseau de voies conductrices métalliques minces, qui sont reliées d'une manière électriquement conductrice à la paroi intérieure du four
